# EUROPÄISCHE PATENTANMELDUNG

(11) **EP 0 664 087 A1**
(43) Veröffentlichungstag der Anmeldung: **26.07.1995**
(21) Anmeldenummer: 94120138.6
(22) Anmeldetag: 19.12.1994
(51) Int. Cl.: A23N 17/00, B65G 45/00

(54) **Vorrichtung zur thermischen Konditionierung von Futtermitteln und dergleichen**

(30) Priorität: 20.01.1994 DE 9400946 U
(71) Anmelder: Amandus Kahl Nachf. (GmbH & Co.), D-21465 Reinbek (DE)
(72) Erfinder: Behrmann, Joachim, D-21465 Reinbek (DE)
(74) Vertreter: Glawe, Delfs, Moll & Partner

(57) **Zusammenfassung**

Die Vorrichtung zur thermischen Konditionierung von Futtermitteln, Ölsaaten und Ölfrüchten und dergleichen mit einem oder mehreren auf einer drehend angetriebenen Welle (3) im wesentlichen schnecken- oder schraubenförmig ausgerichteten Förderelementen (4,5,9), die in einem im wesentlichen zylinderförmigen Gehäuse (1) angeordnet sind, mit einem Gegendruckelement (8) am Ausgangsende des Gehäuses (1), und mit die Gehäusewand durchdringenden Stopelementen (7) zum Behindern einer Drehbewegung des geförderten Materials, zeichnet sich dadurch aus, daß Förderelemente (9) und/oder Stopelemente (7) während des Betriebes der Vorrichtung verstellbar sind.

## Beschreibung

Die Erfindung betrifft eine Vorrichtung zur thermischen Konditionierung von Futtermitteln, Ölsaaten und Ölfrüchten und dergleichen mit einem oder mehreren auf einer drehend angetriebenen Welle im wesentlichen schnecken- oder schraubenförmig ausgerichteten Förderelementen, die in einem im wesentlichen zylinderförmigen Gehäuse angeordnet sind, mit einem Gegendruckelement am Ausgangsende des Gehäuses, und mit die Gehäusewand durchdringenden Stopelementen zum Behindern einer Drehbewegung des geförderten Materials.

Vorrichtungen, die allerdings die aus offenkundiger Vorbenutzung bekannten Stopelemente nicht enthalten, sind bekannt (DE-PS 35 29 229, DE-PS 35 44 298). Mit solchen Vorrichtungen kann das zu bearbeitende Material, das insbesondere ein Futtermittel, Ölsaaten oder Ölfrüchte sein kann, gegen das Gegendruckelement komprimiert werden, wobei sich das Material erwämt. Dabei entsteht auch ein Überdruck, so daß eine Erwärmung bis auf über 100° möglich ist, wobei der entstehende Dampf nicht entweichen kann. Die Erwärmung und Befeuchtung kann weiter dadurch gefördert werden, daß Dampf oder Wasser zugeführt wird. Hat der durch die Förderelemente am Ausgangsende erzeugte Druck einen gewissen erreicht, so öffnet sich das Gegendruckelement ein wenig, so daß das Material die Vorrichtung verlassen kann und dabei schlagartig entspannt wird, wobei überschüssiger Dampf entweicht. In vielen Fällen verwendet man Stopelemente, die verhindern, daß das Material sich infolge geringer Reibung an der Wandung des Gehäuses mit der Welle dreht, was dann ein Komprimieren des Materials unmöglich machen würde.

Diese Vorrichtungen haben sich als sehr erfolgreich erwiesen, um eine thermische Konditionierung von Futtermitteln auf sehr wirtschaftliche und wirksame Weise durchzuführen, wobei durch die hohen Temperaturen schädliche Bakterien und störende Enzyme abgebaut oder abgetötet werden.

Ein Nachteil dieser Vorrichtungen ist es, daß die zu bearbeitenden Materialien sehr unterschiedlich sind. Es sollen mit derselben Vorrichtung nicht nur unterschiedliche Materialien verarbeitet werden, was unterschiedliche Arbeitsbedingungen erfordert. Auch das gleiche Material, da es sich um natürlich gewachsene Stoffe handeln kann, unterscheidet sich häufig in seinen Eigenschaften, insbesondere bezüglich der Feuchtigkeit. Um dann ein optimales Ergebnis zu erhalten, müssen die Arbeitsbedingungen geändert werden. Dies kann nur in beschränktem Maße durch Änderung der Menge des zugegebenen Dampfes, der Drehgeschwindigkeit der Welle oder durch Änderung des Gegendrucks des Gegendruckelements erreicht werden. Es müssen vielmehr häufig für unterschiedliche Anwendungen auch die Stopelemente herausgenommen oder durch andere Stopelemente ausgewechselt werden, die tiefer oder weniger tief in das Gehäuse hineinragen und daher die Drehbewegung des geförderten Materials stärker oder weniger stark behindern. Solche Änderungen sind auch notwendig, wenn den zu verarbeiteten Materialien Zusatzstoffe zugegeben werden, wie z.B. Fette oder Melasse.

Die Aufgabe der Erfindung besteht in der Schaffung einer Vorrichtung der eingangs genannten Art, die einfach und schnell auf verschiedene Materialien eingestellt werden kann.

Die erfindungsgemäße Lösung besteht darin, daß die Förderelemente und/oder Stopelemente während des Betriebes der Vorrichtung verstellbar sind.

Bei der erfindungsgemäßen Vorrichtung ist es daher nicht mehr erforderlich, je nach Art und Qualität des Materials die Vorrichtung erst abzustellen, Elemente auszuwechseln und dann erneut in Betrieb zu setzen. Es kann vielmehr eine Verstellung auch während des Betriebes der Vorrichtung vorgenommen werden, wobei dann, wenn die ideale Einstellung vorher nicht bekannt ist, diese sehr schnell durch Veränderung die optimale Einstellung herausgefunden werden kann.

Bei einer vorteilhaften Ausführungsform ist wenigstens ein Teil der Förderelemente paddelförmig ausgebildet und um eine zur Wellenachse im wesentlichen senkrechte Achse drehbar. Insbesondere können die paddelförmigen Förderelemente über einen in der als Hohlwelle ausgebildeten Welle angeordneten Verstellmechanismus verstellbar sein. Solche Verstellmechanismen sind in ähnlicher Form bei Verstellpropellern von Flugzeugen und Schiffen bekannt, so daß es nicht notwendig ist, diese Verstellmechanismen hier näher zu erläutern.

Eine weitere vorteilhafte Ausführungsform zeichnet sich dadurch aus, daß die Stopelemente in radialer Richtung verstellbar sind, so daß die Angriffsfläche vergrößert und verkleinert werden kann.

Bei einer anderen vorteilhaften Ausführungsform weisen die Stopelemente einen von der Kreisform abweichenden Querschnitt auf und sind um Achsen drehbar, die im wesentlichen senkrecht zur Wellenachse sind. Haben die Stopelemente z.B. einen halbkreisförmigen Querschnitt, so kann zur Erzielung eines geringeren Widerstands der Halbkreis dem anströmenden Material ausgesetzt werden, während zur Erhöhung des Widerstandes die ebene Fläche des Elements gegen den anströmenden Materialstrom gerichtet werden kann. Noch größere Veränderungen des Widerstands sind möglich, wenn die Stopelemente plattenförmig sind. Sind mehrere solche plattenförmigen Stopelemente nebeneinander angeordnet, so kann damit der Widerstand sehr stark erhöht werden, wenn die größten Querausdehnungen der Plattenelemente senkrecht zum Materialstrom stehen und dabei zwischen den einzelnen Stopelementen nur sehr wenig Platz verbleibt.

Vorteilhafterweise ist das Gehäuse mit Einrichtungen zum Einführen von Dampf, Wasser und anderen Zusatzstoffen versehen. Aufgrund der Verstellbarkeit der Förderelemente und der Stopelemente ist es nämlich möglich, innerhalb eines großen Anteilsbereiches Zusatzstoffe hinzuzufügen. Die Vorrichtung kann dann den geänderten Arbeitsbedingungen durch Verstellung von Förderelementen und Stopelementen angepaßt werden. Auf diese Weise erhält man eine Vorrichtung, die den sonst notwendigen, einer solchen Vorrichtung vorgeschalteten Mischer überflüssig macht, in dem das Material mit den Zusatzstoffen vermischt wird. Insbesondere auch durch Verstellung der Förderelemente läßt es sich nämlich erreichen, daß das Material lange genug in der Vorrichtung verbleibt und deswegen ausreichend durchgemischt wird.

Eine vorteilhafte Ausführungsform zeichnet sich dadurch aus, daß die Stopelemente einzeln verstellbar sind. Bei anderen vorteilhaften Ausführungsformen können Ringe von Stopelementen oder Reihen von Stopelementen gemeinsam verstellt werden.

Die Verstellung der Elemente kann hydraulisch, elektrisch oder mechanisch erfolgen.

Eine besonders vorteilhafte Ausführungform zeichnet sich dadurch aus, daß die Elemente in Abhängigkeit vom Druck des Gegendruckelementes automatisch verstellbar sind. Bei einer weiteren vorteilhaften Ausführungsform sind die Elemente in Abhängigkeit von der Belastung des die Welle drehenden Motors automatisch verstellbar. Durch solche Regelungen erhält man eine gleichmäßige Qualität des Produktes.

Die Erfindung wird im folgenden anhand von vorteilhaften Ausführungsformen unter Bezugnahme auf die beigefügten Zeichnungen beispielsweise beschrieben. Es zeigen:
- Fig. 1: in schematischer Ansicht und im Querschnitt eine erste Ausführungsform der Erfindung;
- Fig. 2: in einer Detaildarstellung und im Querschnitt eine andere Form der Stopelemente;
- Fig. 3: verschiedene Querschnittsformen von Stopelementen; und
- Fig. 4: in ähnlicher Ansicht wie in Fig. 1 eine Vorrichtung des Standes der Technik.

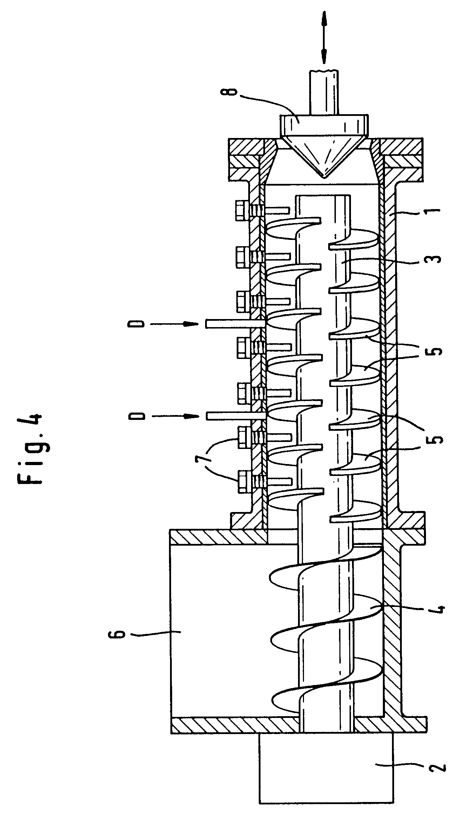

Es soll zunächst anhand der Fig. 4 der Stand der Technik beschrieben werden.

In einem Gehäuse 1 befindet sich eine von einem Motor 2 angetriebene Welle 3, die mit im wesentlichen schrauben- oder schneckenförmig ausgerichteten Förderelementen 4 und 5 versehen ist. Das Förderelement 4 ist dabei als eine durchgehende Schnecke im Bereich der Einfüllöffnung 6 für das Material ausgebildet und befördert dieses Material nach rechts. Im rechten Bereich sind mehrere Förderelemente 5 vorgesehen, zwischen die bolzenförmige Stopelemente 7 hineinragen, die in das Gehäuse 1 eingeschraubt sind. Das Material wird nach rechts gegen ein federbelastetes oder hydraulisch betätigtes Gegendruckelement 8 gedrückt und dabei komprimiert. In Richtung der Pfeile kann noch Dampf zugeführt werden. Ist ein genügender Druck am Gegendruckelement 8 erreicht, so kann das Material austreten und entspannt sich dann schlagartig.

Will man andere Betriebsbedingungen erhalten, so müßten die Stopelemente 7 durch kürzere oder längere Stopelemente ausgetauscht werden.

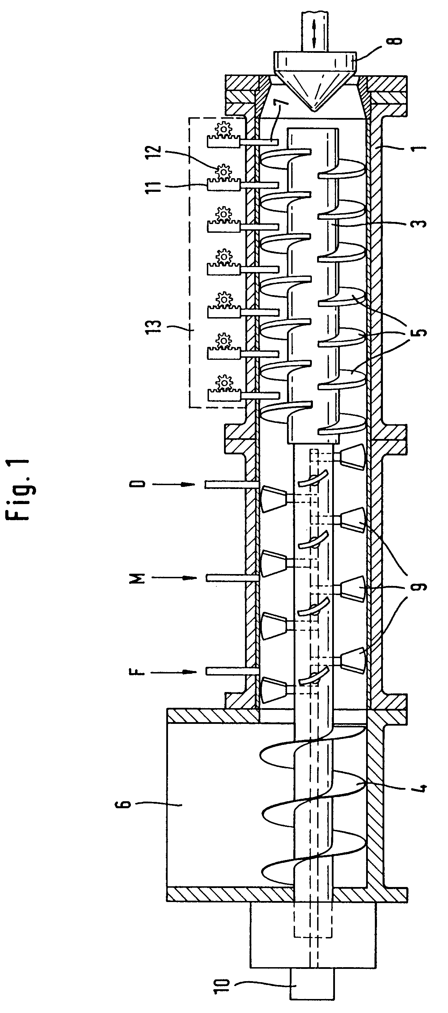

Fig. 1 zeigt eine erste Ausführungsform der Erfindung, bei der sich zwischen den mit der Schnecke 4 und den Förderelementen 5 versehenen Teilen der Welle 3 noch ein mittlerer Abschnitt mit paddelförmigen Förderelementen 9 befindet. Diese paddelförmigen Förderelemente 9 sind ebenfalls im wesentlichen schraubenförmig ausgerichtet, um einen Materialstrom nach rechts zu bewirken. Sie dienen aber auch zur Mischung des Materials, dem wie in Fig. 1 angedeutet, Fett, Melasse und Dampf zugeführt werden kann. Die Winkeleinstellung der paddelförmigen Förderelemente 9 ist dabei über eine Verstelleinrichtung 10 einstellbar, die in die als Hohlwelle ausgebildete Welle 3 hineinreicht.

Zusätzlich sind die Stopelemente 7 verstellbar. Sie weisen zu diesem Zweck oben eine Zahnstange 11 auf, die mit Hilfe eines Zahnrades 12 nach oben oder nach unten bewegt werden kann, um die Stopelemente 7 mehr oder weniger tief in das Gehäuse hineinragen zu lassen.

Die Verstelleinrichtung, die bei 13 angedeutet ist, kann auch hydraulisch oder elektrisch betrieben sein.

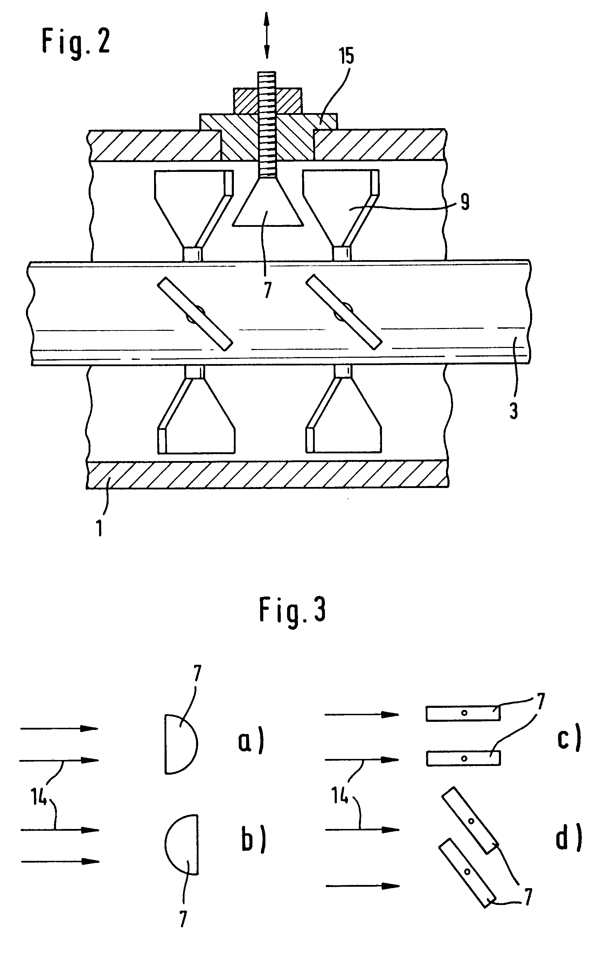

In Fig. 2 ist gezeigt, daß die Stopelemente 7 an ihrem inneren Ende eine Verdickung haben können, so daß je nachdem, wie tief die Stopelemente 7 in das Gehäuse 1 eingefahren werden, verschieden große Zwischenräume zwischen den Stopelementen 7 und den paddelförmigen Förderelementen 9 verbleiben. Damit die Stopelemente 7 überhaupt eingesetzt werden können, sind sie in einer Buchse 15 angeordnet.

Die Bremswirkung der Stopelemente 7 kann nicht nur dadurch verändert werden, daß diese verschieden tief in das Gehäuse hineingefahren werden. Die Elemente 7 können vielmehr einen von der Kreisform abweichenden Querschnitt haben, wie dies in Fig. 3 gezeigt ist. In Fig. 3a und 3b ist ein Stopelement 7 mit halbkreisförmigem Querschnitt gezeigt, in Fig. 3c und 3d sind jeweils zwei plattenförmige Stopelemente 7 gezeigt, wobei je nach Ausrichtung der Widerstand auf den Materialstrom 14 unterschiedlich ist.

## Patentansprüche

1. Vorrichtung zur thermischen Konditionierung von Futtermitteln, Ölsaaten und Ölfrüchten und dergleichen mit einem oder mehreren auf einer drehend angetriebenen Welle (3) im wesentlichen schnecken- oder schraubenförmig ausgerichteten Förderelementen (4,5,9), die in einem im wesentlichen zylinderförmigen Gehäuse (1) angeordnet sind, mit einem Gegendruckelement (8) am Ausgangsende des Gehäuses (1), und mit die Gehäusewand durchdringenden Stopelementen (7) zum Behindern einer Drehbewegung des geförderten Materials, dadurch gekennzeichnet, daß Förderelemente (9) und/oder Stopelemente (7) während des Betriebes der Vorrichtung verstellbar sind.

2. Vorrichtung nach Anspruch 1, dadurch gekennzeichnet, daß wenigstens ein Teil der Förderelemente (9) paddelförmig ausgebildet und um eine zur Wellenachse (3) im wesentlichen senkrechte Achse drehbar ist.

3. Verfahren nach Anspruch 2, dadurch gekennzeichnet, daß die paddelförmigen Förderelemente (9) über einen in der als Hohlwelle ausgebildeten Welle (3) angeordneten Verstellmechanismus (10) verstellbar sind.

4. Vorrichtung nach einem der Ansprüche 1 bis 3, dadurch gekennzeichnet, daß die Stopelemente (7) in radialer Richtung verstellbar sind.

5. Vorrichtung nach einem der Ansprüche 1 bis 4, dadurch gekennzeichnet, daß die Stopelemente (7) einen von der Kreisform abweichenden Querschnitt aufweisen und um Achsen drehbar sind, die im wesentlichen senkrecht zur Wellenachse sind.

6. Vorrichtung nach einem der Ansprüche 1 bis 5, dadurch gekennzeichnet, daß das Gehäuse (1) mit Einrichtungen zum Einführen von Dampf, Wasser und anderen Zusatzstoffen versehen sind.

7. Vorrichtung nach einem der Ansprüche 1 bis 6, dadurch gekennzeichnet, daß die Stopelemente (7) einzeln verstellbar sind.

8. Vorrichtung nach einem der Ansprüche 1 bis 7, dadurch gekennzeichnet, daß mehrere ringförmig angeordnete Stopelemente (7) gemeinsam verstellbar sind.

9. Vorrichtung nach einem der Ansprüche 1 bis 8, dadurch gekennzeichnet, daß mehrere in einer Reihe angeordnete Stopelemente (7) gemeinsam verstellbar sind.

10. Vorrichtung nach einem der Ansprüche 1 bis 9, dadurch gekennzeichnet, daß die Elemente (7,9) hydraulisch verstellbar sind.

11. Vorrichtung nach einem der Ansprüche 1 bis 9, dadurch gekennzeichnet, daß die Elemente (7,9) elektrisch verstellbar sind.

12. Vorrichtung nach einem der Ansprüche 1 bis 9, dadurch gekennzeichnet, daß die Elemente (7,9) mechanisch verstellbar sind.

13. Vorrichtung nach einem der Ansprüche 1 bis 11, dadurch gekennzeichnet, daß die Elemente (7,9) in Abhängigkeit vom Druck des Gegendruckelements (8) automatisch verstellbar sind.

14. Vorrichtung nach einem der Ansprüche 1 bis 11, dadurch gekennzeichnet, daß die Elemente (7,9) in Abhängigkeit von der Belastung des die Welle (3) drehenden Motors (2) automatisch verstellbar sind.
